# EUROPEAN PATENT APPLICATION

(11) **EP 1 835 018 A1**
(43) Date of publication of application: **19.09.2007**
(21) Application number: 05805244.0
(22) Date of filing: 25.10.2005
(51) Int. Cl.: C12G 3/02, C12C 5/00

(54) **PROCESS FOR PRODUCING FERMENTED BEVERAGE WITH BEER TASTE EXHIBITING EXCELLENT BREW FLAVOR**

(30) Priority: 27.10.2004 JP 2004312514; 15.06.2005 JP 2005175769
(71) Applicant: SUNTORY LIMITED, Osaka-shi, Osaka 530-8203 (JP)
(72) Inventor: IZUMI, Takaaki, 5670021 (JP); FURUKUBO, Susumu, 5670828 (JP); TAKAOKA, Seisuke, 1830026 (JP); KAKUDO, Yoichi, 6590092 (JP)
(74) Representative: Vossius & Partner
(86) International application number: PCT/JP2005/019609
(87) International publication number: WO 2006/046567

(57) **Abstract**

An object of the invention is to provide fermented beverages, in particular, beer-taste ones that contain isoamyl acetate abundantly to assure high organoleptic appeal.

The invention also provides a process for producing a fermented beverage by performing alcoholic fermentation of an aqueous liquid mixture comprising a feed containing a carbon source and optionally hop, as well as water, wherein a maize protein digest is incorporated as a nitrogen source in the feed either before or during alcoholic fermentation.

## Description

### TECHNICAL FIELD

The present invention relates to beer-taste fermented beverages having a good flavor and a process for producing them.

### BACKGROUND ART

The organoleptic appeal, in particular, the aroma of brewed alcoholic beverages such as regular beer and low-malt beer is greatly influenced by the brewing aroma of higher alcohols, esters and the like that are generated by a yeast during fermentation. Among these aromatizing substances, isoamyl acetate provides a brewing aroma that affords fruitiness by the banana-like flavor it has, and increasing attention is drawn to techniques that can intensify this component as a substance that enhances the organoleptic appeal of refined sake and wine as well as regular beer and low-malt beer.

For example, JP 11-235176 A discloses a process for producing alcoholic beverages with the amount of production of acetate esters being modified by using a yeast capable of efficient production of isoamyl acetate. JP 6-30756 A discloses a process for producing regular beer with an enhanced ester aroma by performing fermentation under a special condition such as a lowered fermentation temperature.

Isoamyl acetate can also be controlled in terms of the composition of amino acids in the fermenting broth. In particular, it has been confirmed that with an abundant supply of leucine in the fermenting broth, a precursor of isoamyl acetate is amply produced in the middle of the process of its takeup and assimilation by the yeast, whereupon a greater amount of isoamyl acetate is produced (Non-patent document 1).

However, no substantial studies have been made about the method of imparting a flavor to beer-taste fermented beverages, in particular, those which use a small amount of barley such as malt, so that they contain only a limited amount of amino acids as derived from the barley.

JP 2003-250512 A discloses a process for producing an alcoholic beverage with a high content of GABA (gamma-amino butyric acid) using a maize protein digest as a source of glutamic acid supply.

Reference documents
[Patent document 1] JP 11-235176 A
[Patent document 2] JP 6-30756 A
[Patent document 3] JP 2003-250512 A
[Non-patent document 1] Journal of American Society of Brewing Chemists 59(4):157-162 (2001)

### DISCLOSURE OF THE INVENTION

### Problems to be Solved by the Invention

An object of the present invention is to provide fermented beverages, in particular, beer-taste ones that contain isoamyl acetate abundantly to assure high organoleptic appeal.

### MEANS FOR SOLVING THE PROBLEMS

The present inventors thought that even a material using only a small quantity of barley-derived ingredient such as malt would be applicable in a feed for beer-like alcoholic beverages in a process capable of producing brewed beverages that contain isoamyl acetate abundantly to assure high organoleptic appeal; based on this assumption, the inventors paid particular attention to branched-chain amino acids in the feed and selected a maize protein digest as a starting material.

Usually, if a cereal other than barley is used in a feed for beer-taste fermented beverages, the characteristic smell of the cereal becomes so conspicuous as to impair the desired beer-like flavor. However, the present inventors has found that a protein digest of a cereal, even if it is not barley, can be used as a starting material for beer-taste fermented beverages without generating the characteristic smell of the cereal.

Thus, the present inventors investigated the protein digests of various cereals and checked closely how they would affect the composition of amino acids and the flavor. As a result, they have found the following: leucine which is one of branched-chain amino acids is more abundant in a maize protein digest than in malt or other cereal-derived products; if the maize protein digest is added as a source of amino acids in a fermenting broth and the latter is fermented with yeast, the resulting beverage has an extremely high content of isoamyl acetate; further in addition, even if little or no malt is used in the feed, a beer-like flavor can be imparted to the fermented beverage.

Therefore, the present invention provides a process for producing a fermented beverage using a maize protein digest as part of the feed. More particularly, the present invention relates to a process for producing a fermented beverage by performing alcoholic fermentation of a fermentation broth comprising a feed containing a carbon source, a nitrogen source, water and optionally hop, wherein a maize protein digest is incorporated in the feed to afford a good flavor to the fermented beverage.

### ADVANTAGES OF THE INVENTION

The present invention provides a beer-taste fermented beverage with a good flavor and a process for producing it. In particular, the present invention provides a beer-taste fermented beverage that uses a sugar as a main carbon source, which is characterized by having a good flavor with high isoamyl acetate content that results from using a leucine-rich maize protein digest as a main nitrogen source, as well as using a propagation/fermentation aid such as a yeast extract.

### BRIEF DESCRIPTION OF THE DRAWINGS

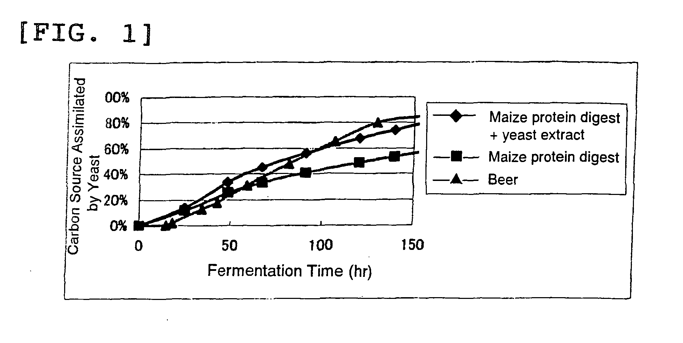

[FIG. 1] FIG. 1 is a graph showing the effect of a yeast extract, as used in the fermentation step, on beer-taste fermented beverages incorporating a maize protein digest.

### BEST MODE FOR CARRYING OUT THE INVENTION

### Fermented beverages

The fermented beverages according to the present invention encompass all beverages that are produced via the step of fermentation with yeast. The fermented beverages, in particular, beer-taste fermented beverages that are provided by the present invention mean those beverages with a beer-like flavor which are produced by fermenting with yeast a feed comprising a carbon source, a nitrogen source, a hop, etc. Usually, the process comprises the steps of adding yeast to a carbohydrate solution prepared either by saccharifying malt and a cereal such as barley, rice or maize or from a sugar itself and then fermenting the mixture; in some cases, a protein derived from a plant other than malt or a hydrolyzate thereof may be used as a nitrogen source. Beer-taste fermented beverages include, for example, regular beer, low-malt beer, *zasshu,* liqueurs, spirits, and low-alcohol fermented beverages (e.g. malt-fermented beverages with an alcohol content of less than 1%).

To produce the beverage of the present invention, a carbon source and a nitrogen source, optionally subjected to proteolysis and saccharification, are mixed, optionally in the presence of an added hop; the liquid mixture is then boiled and subjected to solid-liquid separation, and yeast is added to the resulting clear fermentation broth for subsequent yeast fermentation. If desired, solid-liquid separation may be performed after fermentation.

### Carbon source

The term "carbon source" as used herein means a starting material that serves as a carbon source during fermentation. Examples include malt, cereal materials such as barley other than malt, rice and maize, all converting to carbon sources via the saccharifying step. Among the applicable carbon sources, saccharified starch, sugar syrup and others that are assimilable by yeast without being subjected to the saccharifying step can be herein referred to as sugars. The process of the present invention can advantageously be applied to the case where sugars such as saccharified starch and sugar syrup that are assimilable by yeast without being subjected to the saccharifying step are used as carbon sources. Alternatively, at least 50% of the carbon source in the feed may initially be present as a sugar whereas the remaining part of the carbon source is subjected to fermentation after the cereal material is saccharified. Saccharification may be performed not on malt but rather by a saccharifying enzyme derived from other plants or an animal or a microorganism.

### Nitrogen source

In the present invention, the amino acid source that is to be assimilated by yeast fermentation should contain a sufficient amount of leucine or leucine residues to generate abundant isoamyl acetate upon fermentation. A preferred amino acid source is a cereal protein digest. A maize protein digest is particularly preferred.

The maize protein digest is a kind of plant protein hydrolyzate; it is a starting material in powder or paste form that is produced by fractionally purifying maize to yield a protein fraction, which is hydrolyzed with an acid, an alkali or a protease, and then subjecting the hydrolyzate to a series of steps including neutralization, decoloring/deodorizing, refining, and concentrating. The maize protein digest may be a commercial product, say, ENZAP CP of Dai-Nippon Meiji Sugar Co., Ltd. The maize protein digest is known to contain leucine abundantly in the constituent amino acids. The good flavor of the fermented beverages of the present invention originates from the aroma of the isoamyl acetate that is produced from the leucine in the maize protein digest during fermentation. Therefore, the fermented beverages of the present invention are characterized by containing more isoamyl acetate than those which are produced by the same method except that no maize protein digest is used as a starting material. The advantage that results from this characteristic is particularly noticeable when the fermented beverage is a beer-taste one.

Therefore, in an embodiment of the present invention where the fermented beverage is a beer-taste one, malt may be incorporated in the feed as in the case of producing regular beer; no malt or barley need be used or, alternatively, they may be used in an amount of no more than 50 wt%, preferably no more than 25 wt%, as solids and yet beer-taste beverages having a good flavor comparable to that of regular beer can be produced.

The amount in which the maize protein digest is added is not limited to any particular value as long as it is within the range that can impart a satisfactory flavor without adversely affecting the fermentation step; a preferred amount is from about 0.1 to 0.5 wt%, as solids, of the mother liquor (fermentation broth) in the step of yeast fermentation. The timing of adding the maize protein digest may be at any stage as long as it is added in such a way that it is present in the feed yet to be fermented.

### Hop

Hop is used in the case where the fermented beverage that is to be produced in the present invention is a beer-taste one. Applicable hops may be selected as appropriate for the flavor from among ordinary products that are commonly used in the production of regular beer and the like, i.e., pellet hop, powder hop and hop extracts. If desired, processed hop products such as isomerized hop, hexa-hop and tetra-hop may also be employed.

### Yeast

The yeast to be used in the present invention can be freely chosen considering the type of the fermented beverage to be produced, the desired flavor, fermentation conditions, and the like. For example, commercial beer yeasts such as strain Weihenstephan-34 may be employed.

### Yeast propagation/fermentation aid

In the present invention, if one is to produce common beer-taste fermented beverages from a feed that does not contain barley such as malt or any other cereals or which uses a low proportion of them while utilizing a sugar as a main carbon source, with hop and a pigment such as caramel being added to impart a beer-like flavor, there may be a case where yeast fermentation does not proceed sufficiently in the presence of the maize protein digest that is used as a main nitrogen source. In a case like this, a yeast propagation/fermentation aid may be employed. The yeast propagation/fermentation aid may be of any commonly known types such as an yeast extract, a bran ingredient in rice, barley or the like, vitamin and mineral complexes, which may be used, either independently or in combination, in appropriate amounts. Among these, yeast extracts are used with advantage. The yeast extract acts as a nitrogen source. The amount in which the yeast extract is used is not limited to any particular value as long as it is within the range that allows vigorous fermentation of the yeast; however, for good flavor, the weight ratio of the maize protein digest to the yeast extract is desirably in the range from 4:6 to 8:2.

The beer-taste fermented beverage produced by the process of the present invention contains isoamyl acetate abundantly, so even if the yeast propagation/fermentation promoting aid such as a yeast extract is added, the smell peculiar to the feed can be reduced. If the yeast propagation/fermentation promoter is to be used, it may be added to the feed which is yet to undergo alcoholic fermentation or, alternatively, it may be added during alcoholic fermentation.

### FAN value

The free amino acid nitrogen level (FAN value) as used herein means a quantity that corresponds to the total amount of free α-amino acids. The FAN value of the fermentation both can be adjusted by controlling the amount in which the starting materials such as the maize protein digest and the yeast extract that serve as nitrogen sources are added; for the purpose of yeast fermentation, the amount is generally from 5 to 22 mg/100 ml, preferably from about 10 to 20 mg/100 ml, and more preferably from 15 to 20 mg/100 ml.

In the present invention, a pigment, a foaming agent, a scent, a water-soluble dietary fiber, etc. may optionally be added. The pigment is used in order to impart a beer-like color and a caramel pigment or the like is added in an amount that presents a beer-like color hue. In order to form a beer-like foam, a plant-extracted saponin-base material such as soyabean saponin or Quillaja saponin or a protein-base material such as bovine serum albumin is used as appropriate. In order to impart a beer-like flavor, a scent having a beer flavor can be used in an appropriate amount. Furthermore, a water-soluble dietary fiber such as difficult-to-digest dextrin, polydextrose or a water-soluble corn fiber can be added as required.

### Low-sugar or low-calorie fermented beverages

In a preferred embodiment, the fermented beverage of the present invention is of a low-sugar or low-calorie type.

The fermented beverage that is obtained by using the process of the present invention can be drunk as such; however, in order to produce fermented beverages that can be tasted with a minimum intake of sugars or calorific value, the fermented beverage may be diluted to produce a low-sugar, beer-taste fermented beverage. This is because the maize protein digest to be used in the fermentation feed in the present invention contains isoleucine abundantly so that isoamyl acetate is generated abundantly during brewing. In particular, it has been found that if fermentation is performed under conditions that are so set that the supernatant of the ferment contains more than 2.0 ppm but less than 10.0 ppm of isoamyl acetate, the resulting fermented beverage can be diluted 5 to 8 folds, yet yielding a fermented beverage having a good flavor (Japanese Patent Application 2005-157921). Dilution may be performed with water but in order to compensate for the taste-affording substance in which the low-sugar fermented beverage is deficient, an acidifier, a sweetener, a bitterness imparting agent or an alcohol may also be added; alternatively, the addition of the taste-affording substance may be effected as a separate step after the diluting operation (Japanese Patent Application 2005-157921).

To reduce the sugar content, dilution may be replaced by or combined with the use of a fermentation feed that uses carbon sources at increased proportions of a trisaccharide, a disaccharide and a monosaccharide that are easily assimilable by yeast (say, 80% or more of all carbon sources used).

The term "low-sugar" means that the sugar concentration in a fermented beverage is less than 0.8 wt%, especially less than 0.5 wt% as solids. Fermented beverages that are preferably low-sugar include refined *sake,* wine, regular beer, low-malt beer, liqueurs, spirits, *zasshu,* and beer-taste fermented beverages. Among these, low-malt beer and beer-taste fermented beverages are preferred, with beer-taste fermented beverages being more preferred.

Another advantageous example of the beverages of the present invention is low-calorie beverages, in particular, low-calorie fermented beverages having a beer taste.
Low-calorie beverages are beverages having a calorific value of less than 12 kcal/100 ml and they can be realized by satisfying the requirement of low-sugar and/or low-alcohol.

Low-sugar or low-calorie beer-taste beverages often involve a problem with imparting an aroma.
In the technology of the present invention, the maize protein digest is used as a nitrogen source in the fermentation feed, so a satisfactory fermentation aroma is afforded if fermentation is fully performed; hence, the technology of the present invention can be applied with advantage in the manufacture of low-sugar or low-calorie beer-taste beverages.

### EXAMPLES

The present invention is described below in greater detail with reference to examples, to which the invention is by no means limited.

### [Example 1] Investigating the Compositions of Amino Acids in Proteins Derived from Various Cereals

The compositions of amino acids in proteins of various cereals, in particular, the compositional amounts of branched-chain amino acids were investigated.

The cereals tested were maize, wheat, soybean, and pea. Each of them was physically stripped of the peel fraction, fat, starch, fiber, etc. to obtain a protein fraction.

The composition of the amino acids in 100 g of the thus obtained protein fraction was measured by high-performance liquid chromatography. The protein fraction of each cereal was deproteinated by treatment with ethanol, passed through a filter, and diluted 2000-folds for measuring the contents of amino acids in the solution. The conditions of analysis are shown below.

### <Conditions of analysis>

Column: Aapak Na II-S2 (Φ 4.6 x 100 mmL);
Ammonia stripping column: AECPac II (Φ 4.6 x 50 mmL);
Eluting solution's flow rate: 0.6 ml/min;
Reagents' flow rate: 0.4 ml/min each;
Column temperature: 60°C;
Instrument's wavelengths: Ex. 345 nm, Em. 455 nm.
The results of measurement for the three branched-chain amino acids (valine, leucine, and isoleucine) are shown in Table 1. The maize protein was found to contain more leucine than the other cereal proteins. Since the maize protein abundantly contained the leucine which would contribute to the generation of isoamyl acetate during fermentation, it was evaluated as an ingredient capable of imparting a flavor to fermented beverages. With large contents of valine and isoleucine, the generation of isoamyl acetate is suppressed rather than promoted (Non-patent document 1); however, the contents of valine and isoleucine in the maize protein were comparable to those in other protein ingredients and were evaluated not to cause adverse effects on the generation of isoamyl acetate.

**[Table 1]**

| Branched-chain amino acid | Maize protein | Wheat protein | Soybean protein | Pea protein |
|---|---|---|---|---|
| Valine | 4.5 | 4.1 | 4.8 | 5.3 |
| Leucine | 14.8 | 6.7 | 7.8 | 8.4 |
| Isoleucine | 3.6 | 3.7 | 4.8 | 5.6 |

| | | | | |
|---|---|---|---|---|
| (Unit: g/100 g protein) | | | | |

### [Example 2] Effects on Fermented Beverages

The maize protein digest was studied for the effects it would have on the isoamyl acetate content of beer-taste fermented beverages.
A commercial sugar syrup (Kato Chemical Co., Ltd.) was used to prepare a 10 wt% carbohydrate solution. To this solution, 0.03% caramel pigment and 0.03% pellet hop were added; furthermore, 0.2% maize protein digest (sample A), or 0.2% maize protein digest + 0.2% yeast extract (sample B), or 0.4% yeast extract only (sample C) was added. The resulting samples were boiled for 60-80 minutes and allowed to settle down; then, the residual hop was removed to prepare the corresponding fermentation broths.

In addition, beer wort (sample D) of 100% malt was prepared by the usual method.

The four kinds of fermentation broth were measured for the composition of amino acids by the same technique as in Example 1 and the proportions of branched-chain amino acids relative to the total amino acid composition were calculated.

The results are shown in Table 2. The fermentation broths using the maize protein digest (samples A and B) had higher proportions of leucine than the other samples (samples C and C).

**[Table 2]**

| Sample name | A | B | C | D |
|---|---|---|---|---|
| Proportion of branched-chain amino acids in fermentation broth (w/w% total acid amino content) | | | | |
| | Maize protein digest | Maize protein digest + yeast extract | Yeast extract | Beer wort |
| Valine | 0.06 | 0.07 | 0.08 | 0.07 |
| Leucine | 0.24 | 0.19 | 0.09 | 0.08 |
| Isoleucine | 0.04 | 0.05 | 0.05 | 0.03 |

In the next step, the fermentation broths were fermented with yeast to produce beer-taste fermented beverages. To each fermentation broth, a beer yeast (strain Weihenstephan-34) was added in 0.4-0.6% and fermentation was done at 12-15°C for 6-8 days; after the end of fermentation, the yeast was removed from *moromi* (fermenting broth) and the density of the resulting supernatant was measured with a densitometer; the amounts of the carbon sources assimilated with the yeast were calculated and the progress of fermentation was observed. In addition, the supernatant of *moromi* was held at 40°C until a gas-liquid equilibrium was reached and the amount of isoamyl acetate in the gas phase was assayed by gas chromatography in accordance with the method described in Analytica-EBC (EBC: Europian Brewery Convention). Further, the prepared beverages were evaluated for the aroma by 10 trained panelists who checked for the presence of any off-odor.

The results are shown in Table 3. The products of the present invention, or the beverages prepared from the fermentation broths containing the maize protein (beverages A and B), had higher contents of isoamyl acetate than the beverage (beverage D) using beer wort. They also had no off-odor but presented a satisfactory aroma.

Beverage C in which the propagation/fermentation promoter yeast extract was used as the sole nitrogen source had an increased amount of isoamyl acetate but it was not good to drink on account of a recognizable off-odor.

In sample A, even after it was subjected to the same fermentation step as were the other beverages, an assimilable sugar still remained, indicating the possibility of insufficient fermentation. The reason would be as follows: the maize protein digest contained sufficient amounts of amino acids but was deficient in the trace ingredients (e.g. vitamins and minerals) necessary for the propagation and fermentation of the yeast.

**[Table 3]**

| Types of fermentation both | Beverage A | Beverage B | Beverage C | Beverage D |
|---|---|---|---|---|
| Content of isoamyl acetate (ppm) | 1.9 | 3.5 | 2 | 1.2 |
| Without off-odor^{*1} | ○ | ○ | × | ○ |
| Progress of fermentation^{*2} | × | ○ | ○ | ○ |

| | | | | |
|---|---|---|---|---|
| *1: When at least 80% of the panelists on the organoleptic test pointed out the presence of an off-odor, the beverage was evaluated as having an off-odor (x); when less than 80% of the panelist pointed out the presence of an off-odor, the beverage was evaluated as having no off-odor (○). *2: When no more than 70% of the carbon sources was found to have been assimilated after the end of fermentation, the fermentation was evaluated to be insufficient (x); when at least 70% of the carbon sources was found to have been assimilated, the fermentation was evaluated to be sufficient (○) . | | | | |

From the foregoing, it was confirmed that the use of the maize protein digest as a starting material contributed to a marked increase in the leucine content of the fermentation broth, as well as to a significant increase in the generation of isoamyl acetate in the fermented beverage.

### [Example 3]

In this Example, beer-taste fermented beverages using the maize protein digest were studied for the effect of yeast extract in the fermentation step.

A commercial sugar syrup (Kato Chemical Co., Ltd.) was used to prepare a 10 wt% carbohydrate solution. To this solution, 0.2% maize protein digest, 0.03% caramel pigment and 0.03% pellet hop were added; to one of these levels, 0.2% yeast extract was further added. The resulting solutions were boiled for 60-80 minutes and allowed to settle down; then, the residual hop was removed to prepare pre-fermentation broths. To these pre-fermentation broths, 0.4-0.6% of a beer yeast (strain Weihenstephan-34) was added and fermentation was done at 12-15°C for 150 hours. In the process, the behavior of the carbon sources assimilated during fermentation was measured with a densitometer and the progress of fermentation was observed.

On the other hand, a regular beer with 100% malt that was known to undergo a sufficient degree of fermentation was prepared by the usual method and evaluated in the same way.

The results are shown in FIG. 1. Compared with the regular beer which was known to undergo a sufficient degree of fermentation, the beverage prepared using the maize protein digest was slow in the rate of sugar assimilation, namely, the rate of fermentation was slow. In contrast, the beverage prepared using the maize protein digest in combination with the yeast extract experienced fermentation at the same rate as the regular beer.

Therefore, it was observed that when the maize protein digest is to be used as a starting material, it is desirable to add a fermentation aid such as a yeast extract.

### [Example 4] Studying Optimum Amounts of Addition of Maize Protein Digest and Yeast Extract

With the FAN value of fermentation broths being fixed, optimum ratios for mixing a maize protein digest and a yeast extract were studied.

A commercial sugar syrup (Kato Chemical Co., Ltd.) was used to prepare a 10 wt% carbohydrate solution. To this solution, a maize protein digest and a yeast extract were added as nitrogen sources at varying weight ratios. Further, 0.03% caramel pigment and 0.03% pellet hop were added and the resulting solutions were boiled for 60-80 minutes and allowed to settle down; then, the residual hop was removed to prepare pre-fermentation broths. In each case, the FAN value was adjusted to 20 mg/100 ml.

To the pre-fermentation broths, 0.4-0.6% of a beer yeast was added and fermentation was done at 12-15°C.
Starting at 60-80 hours from the initiation of fermentation, the pressure in the tank was set at 1 kg/cm². The yeast was removed from the sample at the end of fermentation (when the extract content in the fermenting broth would not decrease any more) to afford the supernatant, which was held at 40°C until a gas-liquid equilibrium was reached and the amount of isoamyl acetate in the gas phase was assayed by gas chromatography in accordance with the Analytica-EBC method. In addition, the residual amounts of the carbon sources at the end of fermentation were measured with a densitometer and the progress of fermentation was observed.

The results are shown in Table 4. When the maize protein digest was used as a nitrogen source in 10% to 100%, each beverage had an isoamyl acetate content greater than the desired 1.5 ppm and it was found that fermentation had proceeded adequately. In particular, when the proportion of the maize protein digest to the yeast extract was in the range from 4:6 to 8:2, the isoamyl acetate content was 3 ppm and more, giving particularly good results.

**[Table 4]**

| | | | | | | | | | |
|---|---|---|---|---|---|---|---|---|---|
| Relative use of maize protein digest (%) | 10 | 20 | 30 | 40 | 50 | 60 | 70 | 80 | 100 |
| Relative use of yeast extract (%) | 90 | 80 | 70 | 60 | 50 | 40 | 30 | 20 | 0 |
| Isoamyl acetate content (ppm) | 2.5 | 2.8 | 2.7 | 3.2 | 3.8 | 3.9 | 3.5 | 3.2 | 1.9 |
| Progress of fermentation* | ○ | ○ | ○ | ○ | ○ | ○ | ○ | ○ | × |

| | | | | | | | | | |
|---|---|---|---|---|---|---|---|---|---|
| *: When no more than 70% of the carbon sources was found to have been assimilated after the end of fermentation, the fermentation was evaluated to be insufficient (x); when at least 70% of the carbon sources was found to have been assimilated, the fermentation was evaluated to be sufficient (○). | | | | | | | | | |

### [Example 5] Production of Beer-Taste Beverage

Two kinds of beer-taste beverage were produced using a maize protein digest and a yeast extract in varying amounts.

To 85 kg of mother water, 15 kg of sugar syrup (Kato Chemical Co., Ltd.), 300 g (0.3 wt%) of maize protein digest, 200 g (0.2 wt%) of yeast extract, 30 g of caramel pigment and 30 g of pellet hop were added (to prepare invention product 1). In the other run, 10 kg of sugar syrup (Kato Chemical Co., Ltd.), 200 g (0.2 wt%) of maize protein digest, 300 g (0.3 wt%) of yeast extract, 30 g of caramel pigment and 30 g of pellet hop were added (to prepare invention product 2).

The resulting solutions were boiled for 60 minutes and allowed to settle down; then, the residual hop was removed to prepare fermentation broths. In each run, the FAN value was 20 mg/100 ml. To each of the two fermentation broths, a yeast (strain Weihenstephan-34) was added to give a viable cell count of 20 x 10⁶ cells/ml and fermentation was done at a temperature of 13°C for 8 days. After the end of assimilation of the carbon sources, the yeast was removed by filtration and the resulting fermented beverages were filled into bottles. The isoamyl acetate content in the two kinds of fermented beverage was measured by gas chromatography in accordance with the Analytica-EBC method.

The results are shown in Table 5. The two types of fermented beverage had isoamyl acetate contents of 3.0 and 3.5 ppm, which were more than twice the value of an ordinary commercial regular beer, demonstrating the applicability of the technology of the present invention to the manufacture of actual fermented beverages.

**[Table 5]**

| | Invention product 1 | Invention product 2 |
|---|---|---|
| Amount in which the maize protein digest was used (w/w%) | 0.3 | 0.2 |
| Amount in which the yeast extract was used (w/w%) | 0.2 | 0.3 |
| Content of isoamyl acetate (ppm) | 3.5 | 3.0 |

### [Example 6] Production of Low-Malt Beer

The maize protein digest was added during the step of preparing a low-malt beverage (low-malt beer) for fermentation and a check was made to see what effect it would have on the generation of isoamyl acetate.

Ground malt (2.4 kg) was mixed with 9.6 kg of mother water and the mixture was saccharified and filtered; thereafter, a commercial sugar syrup (Kato Chemical Co., Ltd.) was added in 7.6 kg and mother water was added to adjust the total volume to 100 kg (sample 1). To this level 1, the maize protein digest was further added in 100 g (sample 2). To these two samples, 8 g of pellet hop was added and the resulting solutions were boiled for 60-80 minutes and allowed to settle down; then, the residual hop was removed to prepare pre-fermentation broths.

To the pre-fermentation broths, 0.4-0.6% of a beer yeast was added and fermentation was done at 12-15°C.
Starting at 60-80 hours from the initiation of fermentation, the pressure in the tank was set at 1 kg/cm². After the end of fermentation (when the extract content in the fermenting broth would not decrease any more), the yeast was removed by passage through a filter and the samples in vials were held at 40°C until a gas-liquid equilibrium was reached; the amount of isoamyl acetate in the gas phase was assayed by gas chromatography in accordance with the Analytica-EBC method.

The results are shown in Table 6. Compared with the ordinary low-malt beer (sample 1), the beverage (sample 2) additionally containing the maize protein digest had almost twice as much isoamyl acetate content, clearly showing that the maize protein digest, when added in a small amount (0.1%), was considerably effective in the generation of isoamyl acetate.

**[Table 6]**

| | Isoamyl acetate (ppm) |
|---|---|
| Sample 1: Without maize protein digest | 0.8 |
| Sample 2: With maize protein digest | 1.5 |

### [Example 7] Production of Low-Sugar, Low-Calorie Beverage

To 85 kg of mother water, 15 kg of sugar syrup in which the content of tetra- and higher oligosaccharides was 7% (Kato Chemical Co., Ltd.), 200 g (0.2 wt%) of maize protein digest, 200 g (0.2 wt%) of yeast extract, 0.01 wt% of corn whose husk was processed by subjecting the fiber fraction to high temperature and pressure, 200 g of caramel pigment and 160 g of pellet hop were added. The resulting solution was boiled for 60 minutes and allowed to settle down; then, the residual hop was removed to prepare a fermentation broth. To this fermentation broth, a yeast (strain Weihenstephan-34) was added to give a viable cell count of 20 x 10⁶ cells/ml and fermentation was done at a temperature of 13°C for 8 days. After the end of assimilation of the carbon sources, the yeast was removed by filtration, the fermenting broth was diluted with four volumes of deaerated water, and the resulting fermented beverage was filled into bottles. The isoamyl acetate content in the fermented beverage, both at the end of fermentation (before dilution) and during bottling (after dilution), was measured by gas chromatography in accordance with the Analytica-EBC method. The sugar concentration of the product was measured by the BCOJ method. The calorific value and the alcohol level were measured by standard methods.

The maize protein digest and the corn whose husk was processed by subjecting the fiber fraction to high temperature and pressure had been prepared in Examples 3 and 4 in the patent application (title of invention: Fermented Beverages Using Fractionated Corn) that was filed by the same Applicant on the same day.

The results are shown in Table 7.

**[Table 7]**

| | |
|---|---|
| At the end of fermentation: isoamyl acetate (ppm) | 4.7 |
| During bottling: isoamyl acetate (ppm) | 1.2 |
| During bottling: sugar concentration (w/w%) | 0.46 |
| During bottling: calorific value (kcal/100 ml) | 12 |
| During bottling: alcohol (v/v%) | 1.5 |

Although 4-fold dilution was effected in order to lower the sugar content and the calorific value, the amount of isoamyl acetate generated was as much as 1.2 ppm, comparable to the value for the ordinary commercial regular beer, thus demonstrating the applicability of the present invention to the manufacture of actual fermented beverages.

### INDUSTRIAL APPLICABILITY

The present invention provides a process by which, even if barley-derived ingredients such as malt are used in low proportions, beer-taste brewed alcoholic beverages that contain isoamyl acetate abundantly to assure high organoleptic appeal can be produced by using a maize protein digest as part of the feed. According to the present invention, a beer-like fermented beverage having a good flavor can be produced at lower cost and with greater ease by incorporating a maize protein digest in a feed containing a carbon source, a nitrogen source, water and optionally hop when a fermentation broth comprising the feed is subjected to alcoholic fermentation to produce the fermented beverage.

## Claims

1. A process for producing a fermented beverage by performing alcoholic fermentation of a fermentation broth comprising a feed containing a carbon source, a nitrogen source, water and optionally hop, wherein a maize protein digest is incorporated as a nitrogen source in the feed to afford a good flavor to the fermented beverage.

2. The process according to claim 1, wherein the fermented beverage is a beer-taste fermented beverage.

3. The process according to claim 1 or 2, wherein the feed uses from zero to no more than 50 wt% of barley-derived ingredients including malt.

4. The process according to claim 3, wherein at least 50 wt% of the carbon source in the feed is initially present as a sugar and the remaining part of the carbon source is present as a product of saccharification of cereals.

5. The process according to any one of claims 1 to 4, wherein a propagation/fermentation promoter is further contained in the feed.

6. The process according to claim 5, wherein the propagation/fermentation promoter is a yeast extract.

7. The process according to claim 6, wherein the weight ratio of the maize protein digest to the yeast extract is from 4:6 to 8:2.

8. The process according to any one of claims 1 to 7, wherein the fermentation broth has a free amino acid nitrogen level (FAN value) of 10 to 20 mg/100 ml.

9. The process according to any one of claims 1 to 8, wherein the fermentation broth contains 0.1 to 0.5 wt% of the maize protein digest.

10. A process for producing a fermented beverage by performing alcoholic fermentation of a fermentation broth comprising a feed containing a carbon source, water and optionally hop, wherein the amount of isoamyl acetate in the fermented beverage to be produced is increased by incorporating a maize protein digest as a nitrogen source in the feed.

11. The process according to claim 10, wherein the fermented beverage is a beer-taste fermented beverage.

12. The process according to claim 10 or 11, wherein the feed uses from zero to no more than 50 wt% of barley-derived ingredients including malt.

13. The process according to claim 12, wherein at least 50 wt% of the carbon source in the feed is initially present as a sugar and the remaining part of the carbon source is present as a product of saccharification of cereals.

14. The process according to any one of claims 10 to 13, wherein a propagation/fermentation promoter is further contained in the feed.

15. The process according to claim 14, wherein the propagation/fermentation promoter is a yeast extract.

16. The process according to claim 15, wherein the weight ratio of the maize protein digest to the yeast extract is from 4:6 to 8:2.

17. The process according to any one of claims 10 to 16, wherein the fermentation broth has a free amino acid nitrogen level (FAN value) of 10 to 20 mg/100 ml.

18. The process according to any one of claims 10 to 17, wherein the fermentation broth contains 0.1 to 0.5 wt% of the maize protein digest.

19. A fermented beverage produced by the process according to any one of claims 1 to 18, which has the amount of isoamyl acetate enhanced in comparison with the case where it is produced under the same conditions except for the use of the maize protein digest.

20. The fermented beverage according to claim 19, which contains 1.5 to 4.8 ppm of isoamyl acetate.

21. The fermented beverage according to claim 19 or 20, which is a beer-taste beverage.

22. The fermented beverage according to claim 21, which is a low-sugar beer-taste beverage or a low-calorie beer-taste beverage.

23. The fermented beverage according to claim 19 or 20, which is other than beer-taste beverages.

24. The fermented beverage according to claim 23, which is a low-sugar fermented beverage or a low-calorie fermented beverage.
